# EUROPÄISCHE PATENTSCHRIFT

(11) **EP 1 239 705 B1**
(45) Veröffentlichungstag und Bekanntmachung des Hinweises auf die Patenterteilung: **21.07.2004**
(21) Anmeldenummer: 02405175.7
(22) Anmeldetag: 07.03.2002
(51) Int. Cl.: H05B 6/06, A47J 27/62

(54) **Vorrichtung und Verfahren zum Warmhalten von Speisen**
Apparatus and process for keeping food warm
Appareil et procédé pour maintenir des aliments à température

(30) Priorität: 09.03.2001 CH 442012001; 18.07.2001 CH 133601
(43) Veröffentlichungstag der Anmeldung: 11.09.2002
(73) Patentinhaber: Inducs A.G., 9100 Herisau (CH)
(72) Erfinder: Fuchs, Christian, 8180 Bülach (CH)
(74) Vertreter: Frei, Alexandra Sarah

(56) Entgegenhaltungen:
- EP-A- 0 635 225
- EP-A- 0 921 708
- EP-A- 1 037 508
- DE-A- 4 439 095
- US-A- 3 742 178
- US-A- 6 080 975

## Beschreibung

Die Erfindung betrifft eine Vorrichtung und ein Verfahren zum Warmhalten, Servieren und Präsentieren von Speisen gemäss dem Oberbegriff der unabhängigen Patentansprüche.

In Restaurants, Hotels, auf Kreuzfahrtschiffen und in weiten Gebieten des Gastronomiemarkts, in welchen Speisen an einem Büffet serviert werden, besteht das Bedürfnis, bereits präparierte Speisen zu präsentieren und sie dabei möglichst über längere Zeit ohne wesentlichen Qualitätsverlust, speziell ohne sie zu garen, warm halten zu können.

Aus dem Stand der Technik sind Vorrichtungen, sogenannte Warmhaltesysteme, bekannt, die es ermöglichen, Speisen warm zu halten. Eine weit verbreitete Methode, in z. B. Personalrestaurants, ist das Warmhalten von Speisen in einem Wasserbad. Diese Methode weist zahlreiche Nachteile auf, wie beispielsweise ein sehr träges Heizsystem, eine nicht oder nur schwer regulierbare Energiezufuhr, ein aufwändiges Handling (z. B. Wasser nachfüllen, Warten bis Wassertemperatur erreicht ist, Wasserpfützen aufwischen etc.), sowie hohe Reinigungs- und Betriebskosten. Ausserdem ist mit dem mehrmaligen Öffnen eines Deckels ein permanenter Temperaturverlust bzw. eine ständige Temperatur- und Feuchteänderung verbunden, die einzeln und in Kombination mit einem erhöhten Wasserniederschlag aufgrund des Wasserbads zu einem raschen Qualitätsverlust der Speisen führen.

Beispielsweise wird in der europäischen Patentanmeldung EP 0 635 225 eine Warmspeisenausgabe offenbart, welche mittels höhenverstellbarer Heizplatte auf unterschiedlich tiefe Speisenbehälter einstellbar und entsprechend mit geringerem Energieaufwand verwendbar ist. Dieses Dokument offenbart jedoch keine Temperaturregelung.

Aufgabe der Erfindung ist es, ein Warmhaltesystem zu schaffen, das einfach zu bedienen ist, effizient Speisen warm hält, schnell auf Temperatur- und eventuell auch Klimaänderungen reagiert, geringe Betriebskosten aufweist und vielseitige Möglichkeiten in Bezug auf die Verwendung des Warmhaltesystems bietet. Das System soll kombiniert zum Warmhalten, Servieren und Präsentieren von Speisen (Chafing-Dish-Konzept) verwendet werden können.

Die Aufgabe wird durch die Erfindung gelöst, wie sie in den Patentansprüchen definiert ist.

Das hier offenbarte Warmhaltesystem für Speisen beruht auf induktiver Wärmeerzeugung. Das Warmhaltesystem ist so aufgebaut, dass ein ungewolltes Garen von Speisen gezielt vermieden wird. Die Wärme wird dabei gezielt dort erzeugt wo sie gebraucht wird. Energieverluste werden weitgehend vermieden, was dazu führt, dass das erfindungsgemässe Warmhaltesystem sehr geringe Betriebskosten aufweist. Ein vorzugsweiser modularer Aufbau eines als Warmhaltvorrichtung gestaltetes Warmhaltesystems erlaubt zudem einen einfachen und kompakten Aufbau, sowie vielseitige Verwendbarkeit des Warmhaltesystems und Kombinationsmöglichkeiten einzelner Module.

Das Warmhaltesystem weist eine vergleichsweise geringe thermische Trägheit auf, so dass Temperaturänderungen sehr schnell angepasst oder egalisiert werden können. Eine aktive Kontrolle der Temperatur der warmzuhaltenden Speisen wird über geeignet angebrachte Sensoren ermöglicht. Die Sensoren werden bevorzugt möglichst nahe bei den Speisen angebracht, derart dass eine Temperaturänderung ohne negative Verzögerung ermittelt wird. Vorzugsweise über einen Regelkreis als Regeleinheit wird die Heizleistung geregelt.

Messungen der relevanten Parameter der Speisen werden direkt oder indirekt ermittelt. Bei einer direkten Messung ist der Sensor mit dem Messgut unmittelbar in Verbindung. Bei einer indirekten Messung werden z.B. Sekundärgrössen wie Infrarotstrahlung oder Feuchtigkeit, usw. gemessen. Durch das Erfassen der relevanten Parameter, abhängig vom Anwendungsgebiet, ist es möglich die Speisen mit einem Minimum an Qualitätsverlust zu lagern.

Das Warmhaltesystem beinhaltet mindestens ein aktives und ein passives Element zum Erzeugen von induzierter Wärme. Als aktives Element kommt bevorzugt eine Induktionsspule zum Einsatz, die mit einem passiven Element zusammenwirkt. Das passive Element beinhaltet bevorzugt Material mit ferromagnetischen Eigenschaften. Eisen-, nickel- und kobalthaltige Materialien, sowie Heuslersche Legierungen (ferromagnetische Legierungen deren einzelne Komponenten nicht ferromagnetisch sind) eignen sich besonders.

Das passive Element ist bevorzugt in oder mit einem Gefäss für Speisen kombiniert, z.B. als Keramik- oder Glasschale mit integriertem oder angebrachtem ferromagnetischem Mittel, in Form einer Folie oder anderen Elementen. Die Gefässe können auch ganz oder zumindest teilweise aus ferromagnetischen Materialien bestehen. Durch eine geeigneten Anordnung der ferromagnetischen Mittel wird die Wärme gezielt verteilt, resp. dort erzeugt, wo sie optimal erforderlich ist. Als Gefässe sind flache Schalen besonders geeignet. Die Gefässe zur Aufnahme von Speisen weisen bevorzugt Dimensionen auf, welche mit in der Gastronomie üblichen Normen (Gastronormen) kompatibel sind.

Die aktiven Elemente werden bevorzugt mit einer Vorrichtung, z.B. ein Gestell, integriert, die zur Aufnahme von einem oder mehreren Gefässen mit passiven Elementen geeignet sind. Die Vorrichtung ist mit Vorteil derart ausgestaltet, dass eines oder mehrere Gefässe unterschiedlicher Grösse und Ausgestaltung gleichzeitig mit der Vorrichtung kombinierbar sind. Die Vorrichtung ist so ausgestaltet, dass die aktiven Elemente und die passiven Elemente wirkverbindbar sind, indem z. B. das oder die Gefässe zur Aufnahme von Speisen auf die Vorrichtung gestellt wird, resp. werden.

Die Vorrichtung mit den aktiven Elementen zur Erzeugung von Wärme weist bevorzugt eine Platte auf, welche für ein induzierendes Feld transparent ist. Die Platte kann z. B. aus einem keramischen Material (Ceran) bestehen und ist derart angeordnet und ausgebildet, dass eines oder mehrere Gefässe darauf gestellt werden können. Unterhalb der Platte ist eines oder mehrere aktive Elemente, z. B. in Form einer Spule, angeordnet, welche zur thermischen Anregung von passiven Elementen dient, resp. dienen. Bei mehreren aktiven Elementen sind diese derart angeordnet, dass jedes einen gewissen Teilbereich der Platte abdeckt. Bei einer grösseren Vorrichtung können z. B. zwei, vier oder sechs Spulen in einer oder zwei Reihen unterhalb der Platte angeordnet sein. Thermische Sensoren können z. B. in der Mitte der Spulen, unmittelbar unterhalb der Platte angeordnet werden, derart dass sie möglichst zuverlässig die Temperatur der Speisen ermitteln. Jede Spule wird bevorzugt einzeln angesteuert, derart, dass die Heizleistung je einzeln geregelt werden kann. Dies bietet den Vorteil, wenn z.B. mehrere Gefässe mit Speisen gleichzeitig auf der Platte stehen, dass die Heizleistung für jedes Gefäss individuell geregelt werden kann. Wenn nur ein Gefäss auf der Platte steht, welches nicht die gesamte Platte abdeckt, ist es ausserdem möglich, dass nur die Spulen aktiviert werden, welche abgedeckt sind.

Die Anordnung der Spulen korrespondiert mit Vorteil mit der Grösse der Gefässe, insb. mit der in der Gastronomie gängigen Normen und der oder den möglichen Anordnungen der zu erwärmenden Gefässe. Durch eine aktive Kontrolle ist es möglich zu kontrollieren ob eine Spule besetzt ist oder nicht. Beispielsweise durch eine Messung der Temperaturänderung oder der Heizleistung kann verhindert werden, dass falsch besetzte oder unbesetzte Spulen mit Heizleistung versehen werden.

Die erfindungsgemässe Vorrichtung ist derart ausgebildet, dass ein unerwünschter Kochvorgang der Speisen verhindert wird. Die Kontrolle der Energiezufuhr geschieht durch 'Abfragen' der an den Temperaturfühlern gemessen Temperatur z. B. durch einen Mikroprozessor. Die Energiezufuhr in die aktiven Induktionsmittel wird so geregelt, dass Speisen warm gehalten werden, indem eine eingestellte Temperatur durch eine elektronische Kontrolle der Temperaturfühler konstant gehalten wird. Des Weiteren ist ein Sicherheitsschutz gegen Überhitzung eingebaut, der ein automatisches Unterbrechen der Energiezufuhr bewirkt, beispielsweise wenn ein zu grosser Temperaturgradient, z. B. nahe der Oberfläche des aktiven Elements, gemessen wird. Die Regelung der Energiezufuhr durch möglichst optimal angebrachte Temperaturfühler, führt zu einer sehr kurzen Reaktionszeit des Systems. Dies ist insofern wesentlich, da damit Temperaturveränderungen in den Lebensmitteln weitgehend verhindert werden. Als Folge davon bleiben grössere Temperaturschwankungen aus und die damit verbundenen Qualitätsverluste der Speisen können vermieden werden. Die Leistungs- bzw. Temperaturbegrenzung ist so ausgelegt, dass Speisen auf einer erfahrungsgemässen, optimalen Warmhaltetemperatur im Bereich zwischen z. B. 60°C und 85°C gehalten werden. Regenerationsprozesse, z. B. Kochprozesse, während des Präsentierens und damit verbundene Veränderungen der Lebensmittel werden gezielt verhindert, im Unterschied zu einem System, das zur Aufbereitung von Lebensmitteln dient (z. B. Catering-Verfahren).

Die Platte zur Aufnahme der Gefässe weist bevorzugt Mittel, z. B. in Form von Vertiefungen, auf, welche mit korrespondierenden Gegenmitteln an den Gefässen, z. B. in Form von Erhöhungen, wirkverbindbar sind, wenn die Gefässe auf die Platte gestellt werden. Die Mittel sind derart ausgelegt, dass die Gefässe gegen ein ungewolltes seitliches Verschieben gesichert sind. Dadurch ist es möglich Speisen zu schöpfen, ohne dass sich die Gefässe in denen sich die Speisen befinden verschieben.

Die Vorrichtung kann als Auftisch oder als Einbauvariante z. B. zum Einbau in eine Fläche (Buffet) ausgebildet sein. Sie ist mit Vorteil so ausgestaltet, dass die Speisen mittels einer Abdeckung abgedeckt werden können. Die Abdeckung kann z.B. als ein an einem Scharnier gelagerter Deckel ausgebildet sein. Die Abdeckung kann mit der Steuerung für die Heizleistung wirkverbunden sein, derart, dass ein Öffnen der Abdeckung unmittelbar zu einer Anpassung der Heizleistung führt, bevor andere Sensoren eine Veränderung registrieren. Dies kann z.B. durch ein mit der Abdeckung zusammenwirkender Schalter realisiert werden. Eine vorhandene Elektronik erkennt somit sofort, wenn das Warmhaltegerät geöffnet wird und kann mit einer minimalen Energiezufuhr in die aktiven Elemente beginnen, bevor ein Temperaturfühler eine verminderte Temperatur gemessen hat. Dies führt zu einer extrem kurzen Reaktionszeit des Warmhaltesystems und entsprechend kleinen Temperaturschwankungen in den Lebensmitteln. Die Abdeckung kann zusätzlich mit Klimaöffnungen versehen sein, die für ein Feuchtigkeitsaustausch mit der Umgebung erlauben und für ein optimales Feuchteklima der Speisen sorgen.

Ein Temperaturfühler kann beispielsweise auch in einem Gefäss zur Aufnahme von Speisen, z. B. einer Schale, untergebracht sein und induktiv von der Elektronik angesteuert werden. Dies bietet den Vorteil, dass die Temperaturmessung auf diese Weise noch näher am Messgut ist.

Eine Sicherheitsmassnahme im erfindungsgemässen Warmhaltesystem, ist eine, vorzugsweise elektronisch gesteuerte, ,Grössenerkennung' von passiven Elementen: Nur wenn passive Element auf einer bestimmten Fläche, beispielsweise von einer Schale, abgedeckt werden, erlaubt das Gerät das Einschalten des oder der aktiven Elemente, d. h. die Energiezufuhr in die aktiven Elemente. Das Erkennen von passiven Elementen führt dazu, dass nicht belegte aktive Elemente nicht mit Energie versorgt werden, womit Energie gespart und zusätzliche Sicherheit geboten wird. Durch das sehr effiziente Heizsystem wird der Energieverbrauch des Warmhaltesystems gering gehalten, so dass sich die Unterhaltskosten während des Betriebs auf ein Minimum beschränken.

Eine Halterung ist vorzugsweise ein Gestell mit Deckel. Der Deckel kann aus Metall, oder zur besseren Wärmeisolierung aus isolierendem oder wärmerückstrahlendem Material hergestellt bzw. beschichtet sein. Wird der Deckel ganz oder teilweise aus einem geeigneten, durchsichtigen Material, z.B. Glas, beispielsweise doppelverglast und/oder beschichtet zur Minimierung von Kondenswasserbildung, hergestellt, bietet dies den Vorteil, dass die im, das passive Element aufweisende, Gefäss befindlichen Speisen betrachtet werden können, ohne dass ein Öffnen des Deckels erforderlich ist.

Die Platte zur Aufnahme der Gefässe ist vorzugsweise ein Ceranfeld. Die Grösse der Platte ist mit Vorteil der Grösse von der Gastro-Norm entsprechendem Geschirr angepasst. Vorzugsweise ist das Ceranfeld eben. Falls das Feld jedoch Mittel zur Arretierung von Geschirr aufweist, entsprechen die Arretiermittel vorzugsweise ebenfalls Normen von passiven Wärmelementen, z. B. Sockelabständen von GN-Schalen oder der Breite der Schalen.

Ein Gefäss, das mindestens ein passives Element aufweist, besteht bevorzugt aus einer mit oder ohne Deckel ausgestatteten Schale, z. B. einer Keramikschale mit angebrachten oder integrierten passiven Elementen beispielsweise in der Form einer ferromagnetischen Folie oder anderen Mitteln. Durch eine geeignete Anordnung der passiven Elemente wird die Wärme gezielt verteilt, resp. dort erzeugt, wo sie erforderlich ist. Eine auf der Unterseite einer Schale aufgespannte oder in die Unterseite der Schale eingebrachte Folie kann beispielsweise mit Aussparungen versehen sein, wobei die Verteilung der Aussparungen nach Bedarf gewählt wird. Eine Möglichkeit ist auch eine isolierende Schale, die in ihrem Innern wärmeleitende Elemente, z. B. eine wärmeleitende Schicht, die mit dem passiven Element identisch sein kann, aufweist, die bis in die Randbereiche der Schale reichen. Die in den passiven Elementen erzeugte Wärme gelangt über die leitende Schicht bis in die Randbereiche der Schale. Dies sorgt für eine noch bessere und gleichmässigere Wärmeverteilung in den Lebensmitteln.

Es werden vorzugsweise Schalen verwendet, die verschiedenen Standardgrössen, speziell Gastro-Normen, z. B. 1/1, 1/2, 1/3, 2/3 der Grösse der Keramikplatte bzw. des Ceranfelds, entsprechen, so dass sie vielseitig kombiniert und möglichst Platz sparend auf dem Ceranfeld angeordnet werden können. Ein Gefäss aus isolierendem Material bietet den Vorteil, dass wenig Wärme verloren geht. Es können aber auch wie bereits erwähnt anders gestaltete, aus anderen Materialien bestehende Schalen verwendet werden.

In einer bevorzugten Ausführungsform ist das erfindungsgemässe Warmhaltesystem als Warmhaltevorrichtung gestaltet, welche einen modularen Aufbau aufweist. Dieser besteht im wesentlichen aus einem Energieteil und, falls erforderlich, einer Halterung und einer Abdeckung. Der Energieteil ist vorzugsweise ein als Regeleinheit gestaltetes Modul, welches zum induktiven Heizen verwendbare induzierende Elemente, deren Steuerung und Energieversorgung, sowie eine allfällige Sensorregelung beinhaltet. Sie ist vorzugsweise wie die oben erwähnte Vorrichtung gestaltet. Vorzugsweise ein weiteres Modul ist als Halterung gestaltet, worin eine Regeleinheit gehalten wird. Auf die Regeleinheit können Gefässe gestellt werden, die passive Elemente zur induktiven Wärmeerzeugung beinhalten. Die Gefässe, z. B. Schalen, sind vorzugsweise mit einem weiteren, als Abdeckung gestalteten Modul, abgedeckt.

Die Abdeckung kann mit einem anderen Modul, beispielsweise mit einer Halterung, fest verbunden sein.

Einzelne Module sind so gestaltet, dass die Warmhaltevorrichtung vorzugsweise ohne den Einsatz von Werkzeugen rasch zerlegbar und wieder zusammensetzbar ist. Dazu sind einzelne Module über Befestigungsmittel, vorzugsweise über Wirk- und Gegenmittel aneinander befestigt, derart, dass einzelne Module einfach miteinander verbunden und wieder auseinander genommen werden können. Sämtliche Befestigungsmittel sind bevorzugt so gestaltet, dass sie möglichst einfache Formen aufweisen. Beispiele für Wirk- und Gegenmittel sind formschlüssige Befestigungsmittel, beispielsweise Ausformungen wie Vorsprünge oder Stifte und dazu korrespondierende Aussparungen wie Nute oder Löcher. Weitere Wirk- und Gegenmittel sind Spannschlösser oder Riegel mit denen einzelne Module aneinander befestigt und miteinander verbunden werden können. Eine Verbindung von Modulen wird dann durch Schliessen einer Spannvorrichtung oder Einrasten eines Riegels, beispielsweise durch Drehen, hergestellt. Die einzelnen Module sind bevorzugt einfach und kompakt gebaut und vorzugsweise so ausgestaltet, dass sie ein einfaches Reinigen ermöglichen und vielseitig einsetzbar und kombinierbar sind.

Durch den modularen Aufbau sind einzelne Module vielseitig verwendbar. Sie können je nach Bedarf weggelassen, ersetzt oder beispielsweise zum Reinigen entfernt werden.

In einer bevorzugten Ausführungsform des erfindungsgemässen Warmhaltesystems, wird ein als Regeleinheit ausgestaltetes Modul in ein Gestell eingesetzt. Je nach Gestaltung des Gestells kann die Warmhaltevorrichtung als Auftischvariante oder als freistehendes Einzelgerät verwendet werden. Als Auftischvariante eignet sich auch eine einfache Halterung, beispielsweise in Form eines tablarähnlichen Aufbaus mit Rahmen, in den die Regeleinheit eingesetzt wird. Ein Modul kann zum einfacheren Verbinden mit weiteren Modulen und um im verbundenen Zustand stabilisiert zu werden Führungs- und Stabilisationsmittel aufweisen. Diese sind vorzugsweise direkt in den Befestigungsmitteln integriert, können aber auch als zusätzliche Mittel, beispielsweise als seitlich angebrachte vertikale oder horizontale Schienen, ausgebildet sein. Um einzelne Module besser halten zu können, sind sie vorzugsweise mit Haltemitteln, z.B. Griffen oder Aussparungen, ausgestattet. Führungs- und Haltemittel sind je nach Bedarf als im Modul versenkbare Einheiten ausgebildet.

Eine Halterung für eine Regeleinheit kann auch eine geeignete Aussparung mit entsprechenden Befestigungsmitteln in einer Fläche z. B. eines Buffets oder einer Einbauküche sein. So kann dieselbe Regeleinheit in einer Küche verwendet, und anschliessend in beispielsweise einen Speisesaal transportiert und dort in eine bereitstehende Halterung eingesetzt werden. Dies ist vor allem für kleinere Betriebe von Vorteil, die nicht über mehrere Warmhaltevorrichtungen verfügen.

Eine Halterung weist bevorzugt eine Abdeckung in Form eines Deckels auf, der ebenfalls als Modul anbringbar und wieder entfernbar ist. Der Deckel weist dazu beispielsweise seitlich angebrachte, ringförmige Befestigungsmittel auf, die um korrespondierende Befestigungsmittel der Halterung, z.B. seitlich angebrachte zylinderförmige Ausformungen, angebracht werden können. Die Befestigungsmittel und die Halterung sind vorzugsweise so gestaltet, dass der Deckel in geöffnetem Zustand zumindest teilweise in der Halterung versenkt werden kann (sog. ,Rolltop').

Ein modularer Aufbau bietet nebst einer vereinfachten Reinigung und vielseitiger Einsetzbarkeit auch eine allgemein einfachere Handhabung und eine erhöhte Mobilität der Warmhaltevorrichtung. Einzelne Module können problemlos von einer einzelnen Person gehandhabt und getragen werden, so dass die Module oder das gesamte Warmhaltesystem leicht von einem Ort an einen anderen versetzt werden können. Einzelne Module werden dazu durch einfaches Lösen der formschlüssigen Befestigungsmittel oder allenfalls nach vorgängigem Öffnen von Spannschlössern oder Riegeln entfernt. Der modulare Aufbau bietet zudem auch Vorteile in der Herstellung. Einzelne Module können so durch verschiedene Firmen hergestellt werden, wobei die Module sowie Ersatzmodule direkt vom Endverbraucher mit bestehenden Modulen kombiniert werden können. Die Grösse der Module, sowie die Befestigungsmittel sind vorzugsweise normiert, so dass beispielsweise andere Regeleinheiten wie elektrisch oder mit Gas beheizbare Einheiten mit einer bestehenden Halterung kombiniert werden können.

Ein Modul als Regeleinheit ist vorzugsweise so gestaltet, dass sie ein einzelnes Gehäuse bildet, welches vorzugsweise aktive Elemente, z. B. Induktionsspulen, die dazu benötigte Energieversorgung, z. B. Generatoren, sowie eine für ein elektromagnetisch induzierendes Feld durchlässigen Fläche, beispielsweise eine Keramikplatte, beinhaltet. Des Weiteren ist in der Regeleinheit bevorzugt auch die gesamte Elektronik wie die Steuerung und Kontrolle der Energiezufuhr in die aktiven Elemente, die Überwachung der Sensoren, sowie der Schaltelemente untergebracht. Da aktive Elemente bevorzugt einzeln ansteuerbar sind und ein Generator pro aktives Element zu teuer und zu aufwändig wäre, ist ein einzelner Generator derart mit den aktiven Elementen verbunden, dass die einzelnen Elemente nacheinander während einer bestimmten Zeitspanne beheizt werden können. Die gesamte Regeleinheit ist zudem so gestaltet, dass sie mittels Befestigungs- und allfälligen Führungs- und Haltemitteln in eine Halterung gebracht und daraus entfernt werden kann. Die Stromversorgung für einen Generator ist dabei so angebracht, das ein allfälliges, an eine Regeleinheit angebrachtes Kabel möglichst nach dem Einbau oder vor dem Ausbau der Einheit angebracht und entfernt werden kann, und ein Anbringen des Kabels auch dann möglich ist, wenn sich die Einheit in keiner Halterung befindet. Es ist des Weiteren auch möglich, die eigentliche Stromversorgung, beispielsweise den Kabelanschluss, fix an oder in einer Halterung zu montieren und die Halterung sowie Regeleinheit so zu gestalten, dass beim Zusammenbau der Module ein elektrischer Kontakt durch Verbinden von Kontaktmitteln an den Modulen entsteht.

Einzelne Teile oder Elemente der Module können auch als Untermodule gestaltet sein, derart dass sie bei Bedarf schnell und einfach angebracht und entfernt werden können. Beispiele für solche Teile oder Elemente sind Griffe oder ein Generator, der in Form eines Untermoduls aus einer Regeleinheit entfernt und anderweitig verwendet werden kann.

Die einzelnen Module, insbesondere eine Regeleinheit, sowie die damit verwendbaren Gefässe, weisen bevorzugt Dimensionen auf, welche mit in der Gastronomie üblichen Normen (Gastronormen) kompatibel sind oder solchen Normen entsprechen. Eine Regeleinheit ist dabei mit Vorteil derart ausgestaltet, dass eines oder mehrere Gefässe unterschiedlicher Grösse und Ausgestaltung gleichzeitig mit der Einheit kombinierbar sind.

Im Folgenden ist das erfindungsgemässe Warmhaltesystem und die erfindungsgemässe Warmhaltevorrichtung anhand von bevorzugten Ausführungsformen näher beschrieben.

Es zeigen
- Fig. 1: eine schematische Darstellung eines erfindungsgemässen Warmhaltesystems,
- Fig. 2: eine Aufsicht auf eine Anordnungen von aktiven Elementen,
- Fig. 3: eine Schnittdarstellung durch einen Teil eines Warmhaltesystems,
- Fig. 4: eine Explosionsdarstellung eines Warmhaltesystems,
- Fig. 5: eine perspektivische Darstellung von aktiven und passiven Teilen.,
- Fig. 6: eine Darstellung des einer erfindungsgemässen Warmhaltevorrichtung als modular aufgebaute Warmhaltevorrichtung,
- Fig. 7: eine Darstellung einer weiteren modular aufgebauten Warmhaltevorrichtung,
- Fig. 8a, 8b: beispielhafte Befestigungsmittel, und
- Fig. 9a, 9b: weitere Befestigungsmittel.

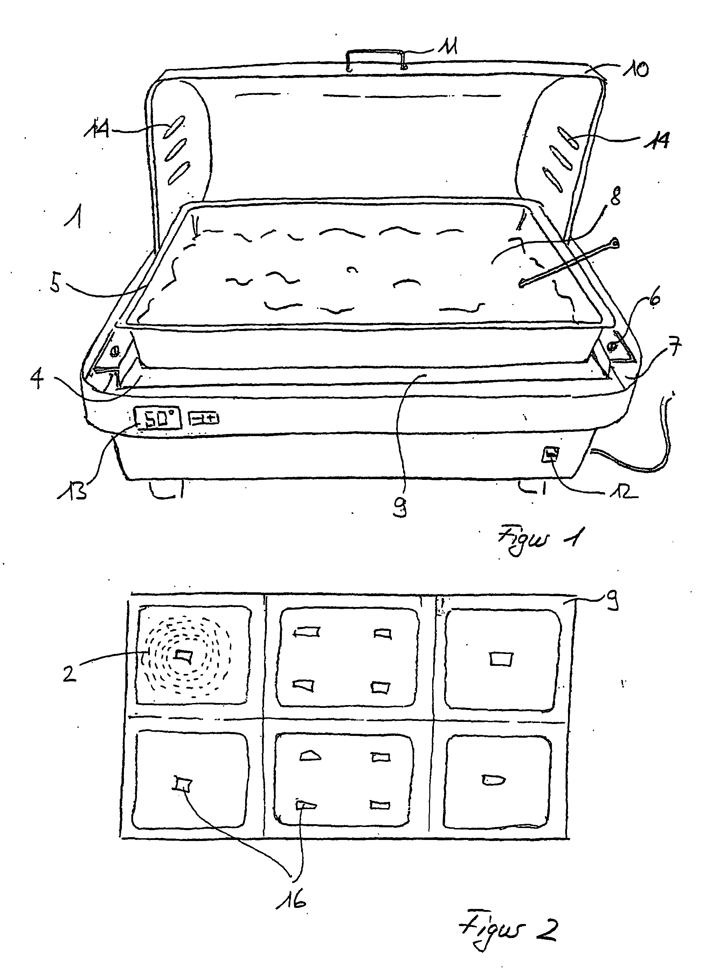

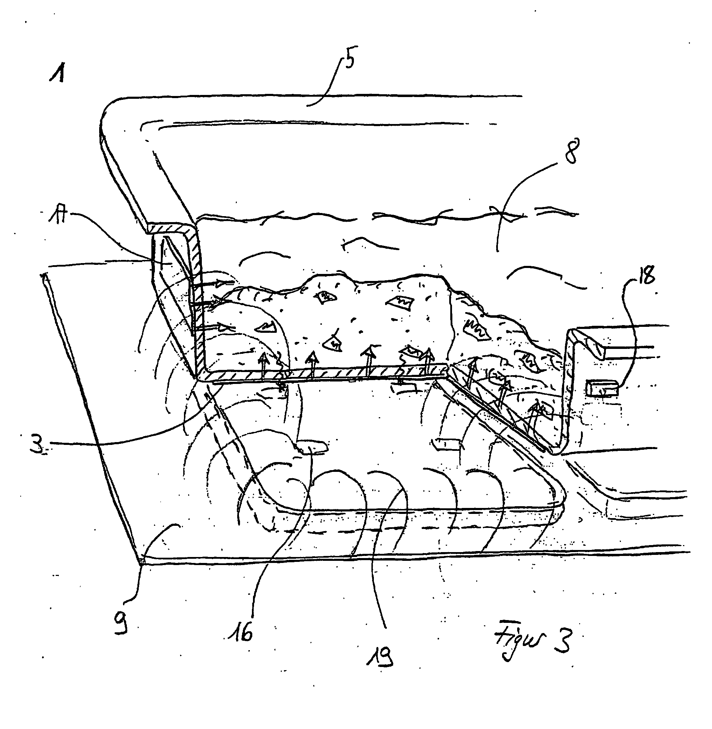

**Figur 1** zeigt schematisch und stark vereinfacht ein erfindungsgemässes Warmhaltesystem 1. Die gezeigte Ausführungsform beinhaltet aktive und passive Elemente 2, 3, die in einer Vorrichtung 4 bzw. in einer Keramikschale 5, untergebracht sind. Die Vorrichtung 4 weist zudem Befestigungsmittel 6, z. B. Schrauben, auf, mittels denen sie in eine Halterung 7, z. B. ein Gestell, eingebaut ist. Die aktiven Elemente 2, z. B. Induktionsspulen, wirken mit den passiven Elementen 3 der Keramikschale 5 zusammen. Die auf diese Weise im passiven Element 3 induzierte elektromagnetische Energie wird in Wärme umgewandelt, welche zum Erwärmen der in der Schale 5 befindlichen Lebensmittel 8 dient. Weiter beinhaltet das erfindungsgemässe Warmhaltesystem 1 eine Keramikplatte 9, vorzugsweise ein ebenes Ceranfeld, auf das die Schale 5 gestellt wird. Das Gestell 7 weist zusätzlich einen Deckel 10 mit Haltegriff 11 auf, wobei der Deckel 10 mit dem Gestell 7 verbunden ist. Der Deckel 10 ist vorzugsweise so angebracht, dass er im geschlossenen Zustand die Vorrichtung 4 und die Schale 5 abdeckt und im offenen oder teilweise geöffneten Zustand zumindest teilweise im Gestell 7 versenkt werden kann (sog. Rolltop). Die Speisen 8 in der Keramikschale 5 sind somit zugedeckt und vor Wärme- und Feuchtigkeitsverlust geschützt. Im Deckel können Öffnungen 14 angebracht sein, die eine übermässige Kondenswasseransammlung verhindern und so für ein optimales Feuchteklima der Speisen sorgen. Im gezeigten Beispiel, sind diese seitlich angebracht. Zusätzlich weist das Warmhaltesystem 1 Schalter 12 und Anzeigemittel 13 auf, die beispielsweise zum Einschalten des Geräts, dem Schalten zwischen unterschiedlichen, vorzugsweise zwei, Leistungsstufen und zum Anzeigen der Temperatur dienen. Das Anzeigemittel 13 kann auch als einfache Leuchtanzeige gestaltet sein: Sobald das Gerät eingeschaltet wird und betriebsbereit ist, fängt z.B. ein Lämpchen zu leuchten an. Mit der Leuchtanzeige ist vorzugsweise ein Fehlermeldevorgang kombiniert. Bspw. wird durch eine unterschiedliche Anzahl Blinkimpulse, -dauer bzw. ―intervalle ein Hinweis auf die Art eines Fehlers gegeben, z.B. kein Spulenstrom, zu hohe Temperatur etc.. Je nach Fehlerart wird die Energiezufuhr in die Induktionsmittel ganz unterbrochen, oder das Warmhaltesystem arbeitet mit reduzierter Leistung, z.B. 60%, im Taktbetrieb weiter. Das Gestell 7 ist vorzugsweise aus CrNi-Stahl hergestellt, wobei der Haltegriff 11 des Deckels 10 und andere einzelne Teile unterschiedliches Material, z.B. polierten Edelstahl oder Messing aufweisen können. Zudem kann die Vorrichtung 4 auch in die Halterung 7 eingeschweisst sein.

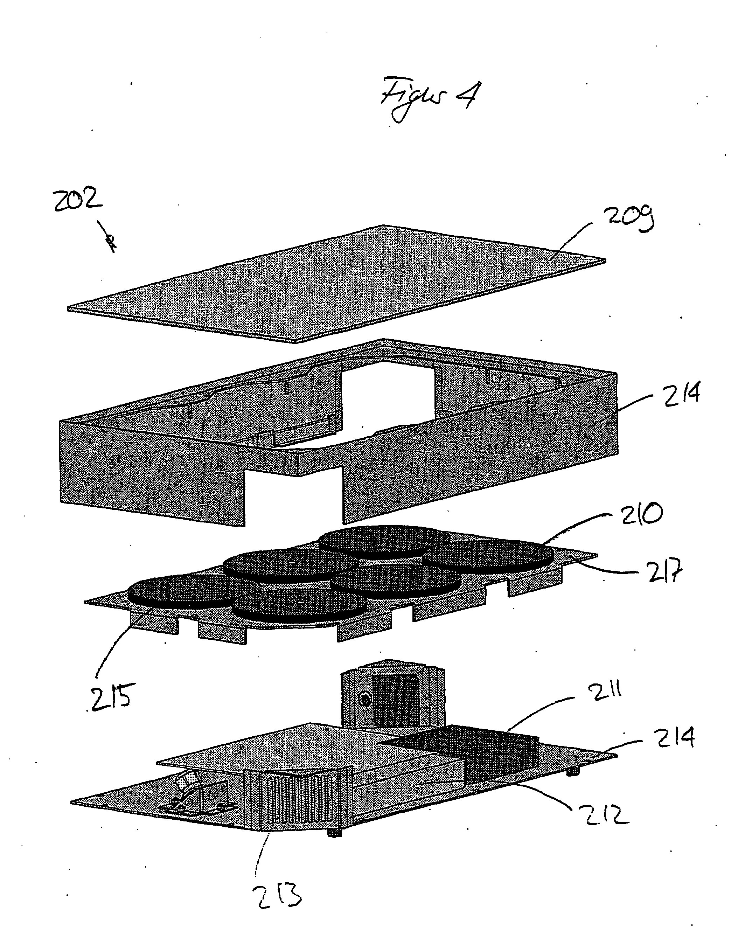

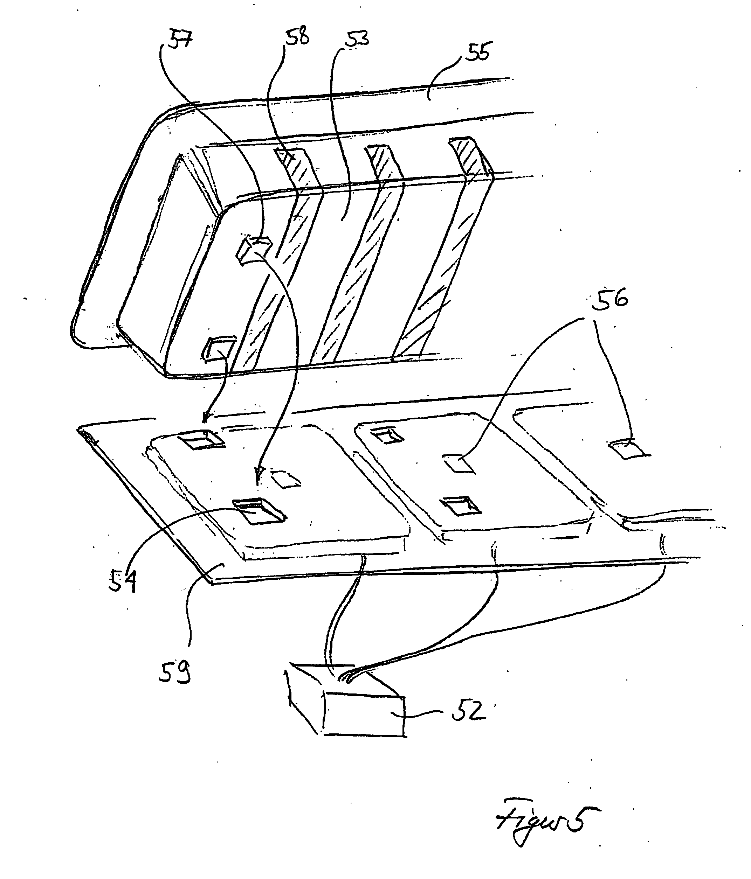

**Figur 2** zeigt eine Aufsicht auf die Platte 9 gemäss Figur 1. Die Platte 9 besteht hier aus Keramik, z.B. Ceran, welche für die induzierten Felder transparent sind und weist unterhalb angeordnete Induktionsspulen 2 auf, die hier als aktive Elemente dienen und in zwei Reihen angeordnet sind. In der Mitte jeder Induktionsspule 2 ist ein oder mehrere Temperaturfühler 16 zu erkennen, welche zur Kontrolle der Temperatur dienen.

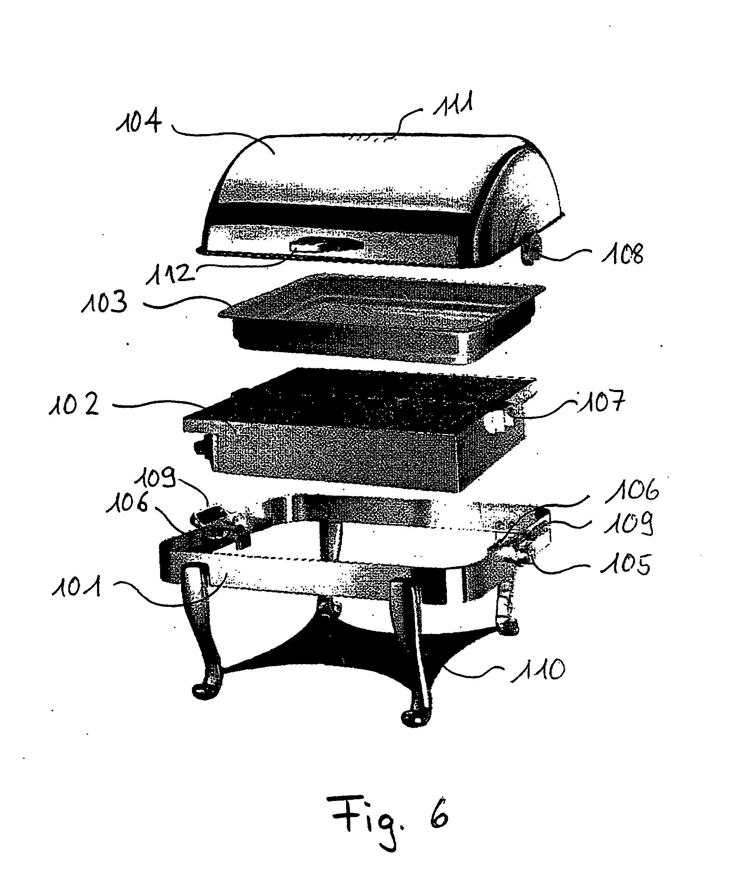

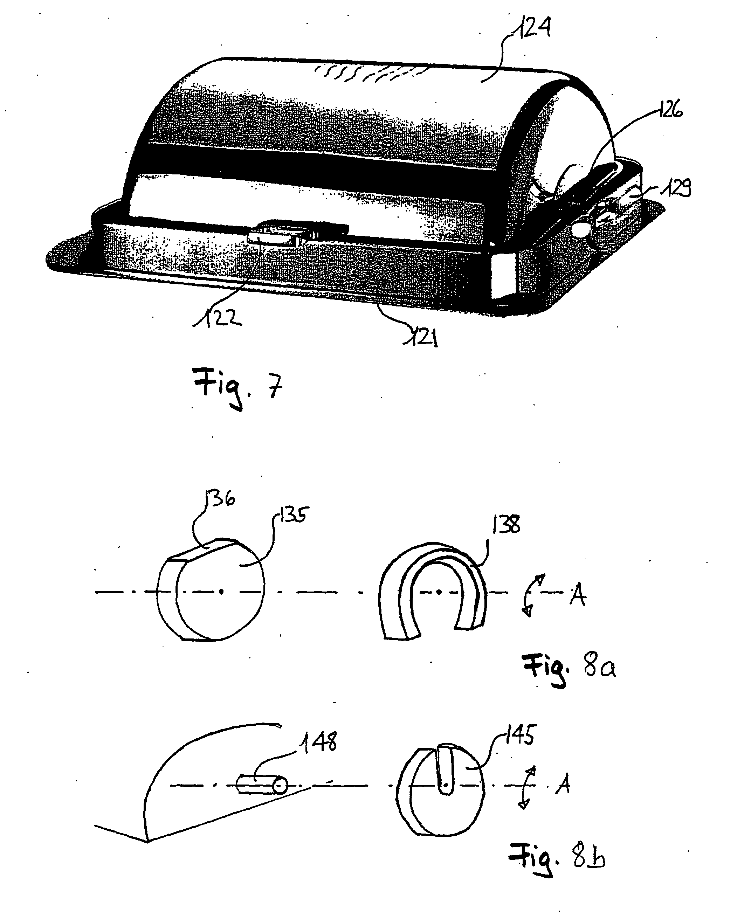

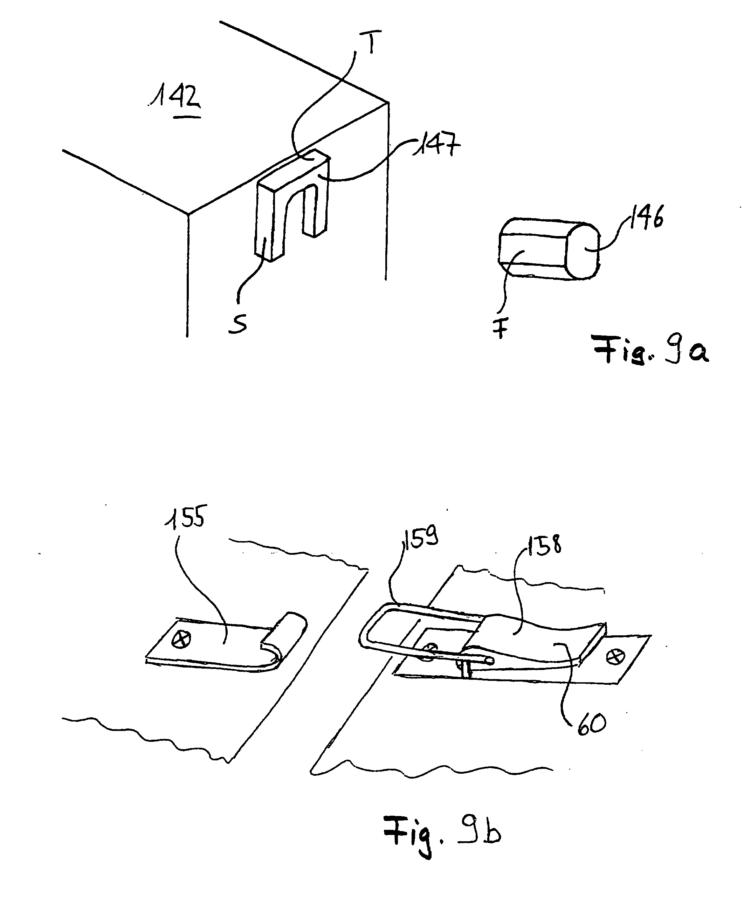

**Figur 3** zeigt einen Ausschnitt des erfindungsgemässen Warmhaltesystems 1 gemäss Figur 1 in einer perspektivischen Schnittdarstellung. Der besseren Verständlichkeit halber ist die Keramikschale 5 geschnitten dargestellt. Zu erkennen sind die Wechselwirkung von aktiven und passiven 3 Elementen in Kombination mit Temperaturfühlern 16. Die mit Speisen 8 gefüllte Schale 5 weist eine Folie 3 auf, die hier als passives Element dient. Die Folie 3 ist auf der Unterseite der Schale 5 angebracht und wird durch die unterhalb der Platte 9 angebrachten Induktionsspulen 2 durch induzierte Wirbelströme erhitzt. Die Folie 3 kann auch im Innern der Schale 5 angebracht werden, um eine direktere Erhitzung der Speisen 8 zu erreichen.

Eine weitere Metallfolie 17, dient als weiteres passives Element. Die Metallfolie 17 ist hier beispielhaft seitlich an der Schale 5 angebracht und dient der lokalen Erzeugung von Wärme. Wie zu erkennen ist, kann mit der hier offenbarten Erfindung Wärme an gezielten Orten erzeugt werden. Bei Bedarf kann der Zustand der Speisen durch ein Temperaturfühler 18, der z.B. an einer Seite der Schale 5 angebracht ist, gemessen werden. Vorrichtungen wie diese, erlauben eine sehr gleichmässige Wärmeverteilung in die Speisen 8 und eine ebensolche Überwachung bzw. Kontrolle derselben.

**Figur 4** zeigt eine Explosionsdarstellung einer erfindungsgemässen Vorrichtung 202. Die Vorrichtung 202 beinhaltet eine ebene, elektrisch isolierende Platte 209, vorzugsweise ein Ceranfeld. Unter dem Ceranfeld 209 ist ein Träger 217 montiert, auf welchem sechs Induktionspulen 210 in zwei Reihen zu je drei Spulen angeordnet sind. Sämtliche Teile sind inklusive einem Generator 211 und einer als Regelkreis bzw. Regeleinheit dienenden Elektronik 212 in dem, vorzugsweise mit einer Lüftungsöffnung 213 versehenen, Gehäuse 214 untergebracht. Zusätzlich befinden sich in der Mitte jeder Spule 210 Temperaturfühler 215, über welche die Temperatur des Kochguts 8 festgestellt und damit die Regelung der Energiezufuhr in die Induktionsspulen 210 kontrolliert wird. Die Temperaturfühler 215 sind zu diesem Zweck mit der Elektronik 212 verbunden. Vorzugsweise sind in der Vorrichtung 202 Schaltmittel angebracht, die es erlauben zwischen unterschiedlichen Leistungsstufen und damit verschiedene Temperaturen, vorzugsweise 70°C und 85°C, einzustellen. Die Leistung ist, in einer bevorzugten Ausführungsform auf 600 W beschränkt und wird auf die Induktionsspulen 210 verteilt., wobei vorzugsweise nur belegte Spulen bestromt werden. Dabei wird die Energiezufuhr von der Elektronik 212 so geregelt, dass die Temperatur der Lebensmittel 8 in einer Keramikschale 5 konstant gehalten wird. Ein Überhitzschutz, z. B. die Kontrolle des Temperaturgradienten an den Temperaturfühlern 215, sorgt für eine automatische Unterbrechung der Energiezufuhr in die Induktionsspulen 210, falls ein gewisser Grenzwert des Temperaturgradienten überschritten wird. Der Schutz kann so gestaltet sein, dass das Gerät nach dem Abkühlen auf Betriebstemperatur selbständig wieder einschaltet, oder dass das Gerät nach dem Abkühlprozess aktiv neu gestartet werden muss. Zur zusätzlichen Sicherheit bzw. Energie sparen, befindet sich in der Vorrichtung 202 eine ,Geschinerkennung', welche die Grösse der auf dem Ceranfeld 9 befindlichen Keramikschale 5 erkennt. Dies geschieht vorzugsweise über eine Widerstandsmessung über den Induktionsspulen 210 oder über eine Induktionsschlaufe, die an der Schale 5 angebracht ist. Die Erkennung geschieht derart, dass eine gewisse Fläche des Feldes 209, z. B. mindestens zwei Spulen 210, mit Schalen 5 abgedeckt sein muss, damit die mit der Elektronik 212 verbundene ,Geschirrerkennung' die Energiezufuhr in die Induktionsspulen 210 freigibt. Nicht abgedeckte Spulen 210 werden entsprechend nicht bestromt. Das Ceranfeld 209 und die darunter liegenden Induktionsspulen 210 sind speziell auf die Gastro-Norm ausgerichtet, d. h. die Grösse des Ceranfelds 9 bzw. die Anordnung der Spulen 210 ist so konzipiert, dass es mit genormten Schalen 5 kompatibel ist. Eine Schale deckt dann eine, zwei, vier oder sechs Spulen 210 ab, wobei die Schalen entsprechend ihrer Grösse beliebig auf dem Ceranfeld 209 angeordnet werden können. Des Weiteren kann am oder im Gehäuse 214 ein Gehäuse-Temperatursensor angebracht sein, der die Temperatur in Innern der Vorrichtung 202, z.B. eines Kühlblechs, überwacht. Die Leistung des Warmhaltesystems wird reduziert bzw. unterbrochen, sobald diese Temperatur einen gewissen Grenzwert, z.B. 65°C, überschreitet. Der Gehäuse-Temperatursensor kann auch dazu verwendet werden, eine Lüftung, z.B. das An- und Abschalten eines Ventilators, zu steuern.

**Figur 5** zeigt die Unterseite einer Keramikschale 55 und ein Ceranfeld 59 eines Warmhaltesystem. Die Schale 55 weist ein passives Elemente 53 und wärmeleitfähige Streifen 58 auf, die mit Temperaturfühlern 56 in Kontakt kommen, sobald die Keramikschale 55 auf das Ceranfeld 59 gestellt wird. Die gesamte Energiezufuhr wird über eine, mit den Temperaturfühlern 56 und Induktionsspulen verbundene Steuerung 52 kontrolliert und geregelt. Die Vorrichtung weist korrespondierende Arretiermittel 54 und 57 auf, die ein seitliches Verschieben der Schale 55 gegenüber der Platte 69 verhindern. Die Arretiermittel sind Vorsprünge 57 an der Unterseite der Schale 55, die mit Aussparungen 54 im Ceranfeld 59 korrespondieren. Die Abstände der Vorsprünge 57 bzw. der Aussparungen 54 entsprechen wie die Grösse der Keramikschale 55 vorzugsweise einer Gastro-Norm, welche verschiedene normierte Grössen beinhaltet. Das Ceranfeld 59 ist entsprechend konzipiert, so dass die Schalen 55, deren Grössen z. B. 1/1, ½, 1/3, 1/6 des Ceranfelds 59 entsprechen, vielseitig kombiniert und möglichst Platz sparend auf dem Feld angeordnet werden können.

**Figur 6** stellt eine vereinfachte Ausführungsform einer modular aufgebauten Warmhaltevorrichtung dar. Die gezeigte Ausführungsform beinhaltet vier Module 101-104, die mittels Befestigungsmittel 105-108 miteinander verbunden und wieder auseinander genommen werden können. Eine Regeleinheit 102 weist Befestigungsmittel in Form von seitlich angebrachten U-förmigen Ausformungen 107 auf, die mit ersten Befestigungsmitteln in Form von seitlich abgeflachten Zylindern 106 eines Gestells 101, korrespondieren. Die Befestigungsmittel 106, 107 sind so angebracht, dass die Regeleinheit 102 nach Einbringen in das Gestell 101, bevorzugt auf den ersten Befestigungsmitteln 106 des Gestells 101 aufliegt. Dazu sind die U-förmigen Ausformungen 107 der Regeleinheit 102 aussen an der Einheit 102 angebracht, dergestalt dass das U nach unten geöffnet ist. Die zylinderförmigen Ausformungen 106 des Gestells 101 sind entsprechend seitlich innen mittig am Gestell 101 angebracht. Die Seiten der U-förmigen Ausformung 107 dienen einerseits als Führung für die Regeleinheit 102 zum Einführen in das Gestell 101 und andererseits zum Stabilisieren, d. h. zum Verhindern, dass die Einheit 102 im Gestell 101 verrutschen kann.

Die Regeleinheit 102 beinhaltet aktive, zum induktiven Heizen verwendbare Elemente wie Induktionsspulen, einen Generator, sowie Elektronik und Schaltmittel, mit denen die Einheit ein- und ausgeschaltet, sowie vorzugsweise auch zwischen unterschiedlichen Leistungsstufen der Einheit gewählt werden kann. Die Regeleinheit 102 kann somit als Einzelmodul dem Gestell 101 entnommen und als voll funktionsfähige Einheit in einer Küchenkombination oder einem Buffet eingebracht werden. Dazu weist eine Küchenkombination oder ein Buffet eine entsprechend grosse Aussparung und korrespondierende Befestigungsmittel auf.

Das Gestell 101 weist zusätzliche zweite Befestigungsmittel 105 auf, die mit Befestigungsmitteln 108 eines Deckels 104 korrespondieren, mit dem ein Speisen beinhaltendes Gefäss 103 abgedeckt werden kann. Die zweiten Befestigungsmittel 105, die dazu korrespondierenden Befestigungsmittel 108 des Deckels 104, sowie die Ausgestaltung des Gestells 101 sind so beschaffen, dass der Deckel 104 mittels den Befestigungsmitteln 105, 108 geschlossen und geöffnet und zumindest teilweise im Gestell 101 versenkt werden kann. Das Gestell 101 weist dazu zwei seitlich aussen angebrachte, im wesentlichen zylinderförmige Ausformungen 105 auf. Die dazu korrespondierenden Befestigungsmittel des Deckels 104, die bevorzugt seitlich aussen, nach unten vorstehend angebracht sind, sind im wesentlichen geschlitzte Ringe 108 oder geschlitzte Hohlzylinder. Die Schlitze sind bevorzugt so gross gewählt, dass die Ringe 108 oder Hohlzylinder mit den Schlitzen über die zweiten Befestigungsmittel 5 des Gestells 101 geführt werden können. Es ist auch möglich, dass der Deckel 104 bei einer gewissen Elastizität des Deckelmaterials von aussen über die zweiten Befestigungsmittel 105 geführt wird und die Ringe 108 oder Hohlzylinder einrasten, sobald sie vollständig über den zylinderförmigen Ausformungen 105 des Gestells 101 sind. Die zylinderförmigen Ausformungen 105 sind bevorzugt auf einer Seite abgeflacht, um die Bewegung des aussen herumgeführten Rings 108 zu begrenzen.

Es ist weiter möglich, die Befestigungsmittel einer Halterung oder eines Deckels mit einem Drehgelenk zu versehen, so dass die Befestigungsmittel beispielsweise einfache stöpselartige Ausformungen sein können.

Das Gestell 101 ist zur besseren Handhabung und Stabilität mit Griffen 109 und einer Unterplatte 110 versehen. Die Unterplatte 110 verhindert das Verbiegen der Beine des Gestells 101 und bietet gleichzeitig eine zusätzliche Abstellfläche, z.B. für Besteck und Servietten. Das Gestell 101 kann auch Rollen aufweisen, die vorzugsweise arretierbar sind.

Am Deckel 104 angebracht ist ein Griff 112 und Öffnungen 111 angebracht. Die Öffnungen sind in dieser Ausführungsform als Schlitze gestaltet und dienen der Feuchteregulierung der Speisen unter dem Deckel 104. Solche Deckelöffnungen 111 sind bevorzugt verschliessbar.

Je nach Grösse bzw. Höhe des Gestells 101 kann die Warmhaltevorrichtung als auf einen Tisch oder ein Buffet zu stellende Auftischvariante oder auch als freistehende Einzelvorrichtung, beispielsweise neben einem Tisch oder Buffet, gewählt werden.

Eine Ausführungsform der erfindungsgemässen Vorrichtung wie sie in Figur 6 gezeigt ist, hat bevorzugt ungefähre Vermassungen von 770 x 475 x 425mm (Breite x Tiefe x Höhe), wobei die Höhe bei einer Ausführungsform gemäss der Figur 7 kleiner ist und vorzugsweise 225 mm beträgt. Aus der Beschreibung geht allerdings hervor, dass theoretisch keine Grössenbeschränkungen vorliegen.

**Figur 7** zeigt eine Warmhaltevorrichtung in einer einfachen Auftischvariante. Die Halterung ist eine tablarförmige Platte mit Rahmen 121, welcher Griffe 129 und innenseitig angebrachte Befestigungsmittel 126 für eine Regeleinheit, sowie für einen Deckel 124 aufweist. Rahmen 121 und Deckel 124 sind so gestaltet, dass der Deckel 124 mit einem an ihm befestigten Griff 122 entlang den Befestigungsmitteln 126 geführt werden kann. Die Rahmenhöhe ist so gestaltet, dass zumindest ein teilweises Öffnen und Versenken des Deckels 124 im Rahmen ermöglicht wird. In einer niedrig gestalteten Auftischvariante ist der Deckel 124 bevorzugt vorne und hinten mit einem Griff 122 versehen, um bequem angebracht und entfernt werden zu können. Die flache Ausführungsform der in dieser Figur gezeigten Auftischvariante erlaubt ein problemloses Verwenden der Regeleinheit inklusive Deckel 124 beispielsweise als Einbauvariante in einer Platte einer Kücheneinrichtung oder in einem Buffet.

In den **Figuren 8a und 8b** sind jeweils zwei Paare von korrespondierenden Befestigungsmittel für einzelne Module gezeigt. Beide Paare zeichnen sich dadurch aus, dass sie sich, nachdem sie miteinander verbunden wurden, um eine gemeinsame Achse A drehen lassen. In Figur 8a sind die Befestigungsmittel zylinderförmig 135 bzw. hohlzylinderförmig 138 gestaltet. Um die Befestigungsmittel 135, 138 in derselben Ebene übereinander schieben zu können, ist der Hohlzylinder 138 entsprechend geschlitzt. Die Befestigungsmittel 135, 138 können Arretiervorrichtungen aufweisen, die eine Drehbewegung begrenzen. Dies ist im Befestigungsmittel 135 als Abflachung des Zylinders 135 dargestellt. Ein hohlzylinderförmiges Befestigungsmittel weist dann entsprechende korrespondierende Ausformungen, beispielsweise ebenfalls Abflachungen, auf.

In Figur 8b ist ein Befestigungsmittel in der Form eines einfachen Zylinders 148, der beispielsweise an einem Deckel befestigt ist, gezeigt. Ein korrespondierendes Befestigungsmittel an einer Halterung, ist dann beispielsweise eine einfache geschlitzte Scheibe 145 oder ein geschlitzter Hohlzylinder. Die Befestigungsmittel 135, 138, 145, 148 sind vorzugsweise so gestaltet, dass sie Einrasten können. Dazu kann der Schlitz der Scheibe 145, durch die der Zylinder 148 geführt wird, leicht verengt sein bzw. der geschlitzte Hohlzylinder 138 wenigstens begrenzt elastisch sein, so dass die Enden des Hohlzylinders 138 bis über die Mitte des Zylinders 135 reichen.

In **Figur 9a und 9b** sind Befestigungsmittel gezeigt, die vorzugsweise an Modulen angebracht werden, die sich nicht gegeneinander verdrehen sollen, wie beispielsweise eine Regeleinheit und eine Halterung. Das in Figur 9a zu sehende U-förmige Befestigungsmittel 147 wird auf den seitlich abgeschnittenen Zylinder 146 aufgesetzt, wobei ein mit dem Befestigungsmittel 147 ausgestattetes Modul 142 mit dem Steg T am Zylinder 146 aufliegt und durch die Seiten S des U's, sowie durch die Abflachungen F am Zylinder 146 gegen ein seitliches Verkippen gesichert ist. Der Zylinder 146 kann auch als einfacher Würfel bzw. als rechteckiger Quader gestaltet sein. In Figur 9b ist ein Befestigungsmittel in der Form eines Spannschlosses dargestellt. Ein hakenähnliches Befestigungsmittel 155 befindet sich dazu beispielsweise an einem Deckel, während die Spannvorrichtung 158 bspw. an einem Gestell befestigt ist. Auch diese Form eines Befestigungsmittels kann sehr einfach ohne weitere Hilfsmittel von einer Person geschlossen und wieder geöffnet werden.

## Patentansprüche

1. Warmhaltesystem zum Warmhalten von Speisen
mit einer Vorrichtung (4,202) und einem oder mehreren Gefässen (5, 55, 103) zur Aufnahme von Speisen (8),
welche Vorrichtung zur Aufnahme von dem einem oder mehreren Gefässen (5,55,103) ausgestaltet ist und eine Regeleinheit (102,212), eine Platte (9,59,209), mehrere aktive Elemente (2,210), sowie mehrere Sensoren (16,18,56,215) beinhaltet, wobei jedem aktiven Element ein zur Temperaturmessung dienender Sensor (16,18,56,215) zugeordnet ist diese, den aktiven Elementen zugeordnete Sensoren, an bzw. in der Platte angebracht sind, und
welche Gefässe je mindestens ein passives, induktiv erhitzbares Element (3, 53) aufweisen, die Gefässe einzeln oder gemeinsam mit der Vorrichtung (4, 202) in Wirkverbindung bringbar sind, dass Gefässe unterschiedlicher Dimensionen mit der Vorrichtung kombinierbar sind und dass die Anordnung der aktiven Elemente dergestalt ist, dass diese durch das eine oder die mehreren Gefässe abdeckbar sind,
derart dass jedes Gefäss (5, 55, 103) durch die je mindestens einen passiven, induktiv erhitzbaren Elemente (3, 53) infolge Induktion durch mindestens eines der mehreren aktiven Elemente (2, 210) der Vorrichtung erhitzbar ist,
und wobei die Temperatur des einen oder der mehreren Gefässe (5, 55, 103) mittels dem einen oder den mehreren Sensoren (16, 18, 56, 215) und der Regeleinheit (102,212) unabhängig vom Füllgrad auf einem einstellbaren Wert haltbar ist.

2. Warmhaltesystem nach Anspruch 1, **dadurch gekennzeichnet, dass** das mindestens eine aktive Element (2, 210) eine Induktionsspule ist.

3. Warmhaltesystem nach Anspruch 2, **dadurch gekennzeichnet, dass** sich mindestens einer der Sensoren (16, 18, 56, 215) in der Mitte einer der Induktionsspulen (2, 210) befindet.

4. Warmhaltesystem nach einem der vorangehenden Ansprüche, **dadurch gekennzeichnet, dass** die aktiven Elemente (2, 210) einzeln regelbar sind.

5. Warmhaltesystem nach einem der vorangehenden Ansprüche, **gekennzeichnet durch** Sensormittel zum Erkennen, welche der aktiven Elemente (2, 210) mit passiven Elementen (3, 53) wirkverbunden sind.

6. Warmhaltesystem nach Anspruch 5, **dadurch gekennzeichnet, dass** nur diejenigen aktiven Elemente (2, 210) mit Energie versorgt werden, die mit passiven Elementen (3, 53) wirkverbunden sind.

7. Warmhaltesystem nach einem der Ansprüche 1-6, **dadurch gekennzeichnet, dass** die Platte (9, 59, 209) ein Ceranfeld ist.

8. Warmhaltesystem nach einem der Ansprüche 1-7, **dadurch gekennzeichnet, dass** die Gefässe der Gastro-Norm angepasste Dimensionen aufweisen.

9. Warmhaltesystem nach einem der Ansprüche 1-8, **dadurch gekennzeichnet, dass** mindestens eines der Gefässe (5, 55, 103) eine Keramikschale ist.

10. Warmhaltesystem nach Anspruch 9, **dadurch gekennzeichnet, dass** das passive Element (3, 53) der Keramikschale (5, 55) eine ferromagnetische Folie ist.

11. Warmhaltesystem nach einem der Ansprüche 1-10, **gekennzeichnet durch** Schaltmittel (12) zum Schalten zwischen unterschiedlichen Leistungsstufen, wobei jeder Leistungsstufe eine Temperatur zugeordnet ist und wobei **durch** die Regeleinheit (102,212) die Energiezufuhr in die aktiven Elemente reduzierbar ist, wenn die Temperatur der Speisen (8) auf eine über die der Leistungsstufe zugeordnete Temperatur ansteigt.

12. Warmhaltesystem nach Anspruch 11, **dadurch gekennzeichnet, dass** über die Regeleinheit (102, 212) Temperaturen in einem Bereich von 60°C bis 85°C eingestellt werden können.

13. Verfahren zum Warmhalten von Speisen mit einem Warmhaltesystem nach einem der Ansprüche 1-12, **dadurch gekennzeichnet, dass** Speisen (8) durch induktive Energieübertragung von mindestens einem aktiven (2, 210) in mindestens ein passives Element (3, 53) warmgehalten werden, dass die Temperatur der Speisen (8) direkt oder indirekt mittels mindestens dem einen aktiven Element zugeordneten Sensor (16, 18, 56, 215) und Regeleinheit (102, 212) gemessen und geregelt wird, dass dadurch eine schnelle und effiziente Regelung von zugeführter Energie in das mindestens eine aktive Element (2, 210) möglich ist und die Temperatur der Speisen (8) auf einem einstellbaren Wert gehalten wird.

14. Verfahren nach Anspruch 13, **dadurch gekennzeichnet, dass** die Energiezufuhr in das mindestens eine aktive Element (2, 210) unterbrochen wird, sobald dieses mindestens eine aktive Element (2, 210) nicht mit einem passiven Element (3, 53) wirkverbunden ist.

15. Warmhaltevorrichtung zum Warmhalten von Speisen mittels induktiv erzeugbarer Wärme als Teil eines Warmhaltesystems gemäss einem der Ansprüche 1-12, aufweisend eine Regeleinheit (102,212), mehrere aktive Elemente, eine Platte, sowie zu jedem aktiven Element ein zugeordneter, zur Temperaturmessung dienender, Sensor (16,56,215), welcher an bzw. in der Platte angebracht ist, wobei die Abmessung der Platte, sowie die Anordnung der aktiven Elemente dergestalt sind, dass sie mit induktiv erhitzbaren Gefässen, welche unterschiedliche Dimensionen aufweisen können, platzsparend kombinierbar sind, wobei jeweils eine oder mehrere aktive Elemente durch die Gefässe abdeckbar sind, und wobei mittels der Sensoren und Regeleinheit die Leistung in die aktiven Elemente regelbar ist.

16. Warmhaltevorrichtung nach Anspruch 15, **gekennzeichnet durch** mehrere Module (101, 102, 104, 121, 124, 142), welche Module (101, 102, 104, 121, 124, 142) Befestigungsmittel (105-108, 126, 135, 138, 145-148, 155, 158) in Form von Wirk- und Gegenmittel zum lösbaren Verbinden der einzelnen Module (101, 102, 104, 121,1 24, 142) aufweisen.

17. Warmhaltevorrichtung nach Anspruch 16, **dadurch gekennzeichnet, dass** ein Modul ein Energieteil ist, der zum induktiven Beheizen mindestens eines Gefässes (103) dient.

18. Warmhaltevorrichtung nach Anspruch 17, **dadurch gekennzeichnet, dass** der Energieteil als Regeleinheit (102) ausgebildet ist und die aktiven, zum induktiven Heizen verwendbaren induzierenden Elemente, eine Steuerung und eine Energieversorgung beinhaltet.

19. Warmhaltevorrichtung nach einem der Ansprüche 16-18, **dadurch gekennzeichnet, dass** ein Modul eine Halterung in Form eines Gestells (101), eines tablarähnlichen Aufbaus (121) oder einer Einbaufläche ist.

20. Warmhaltevorrichtung nach einem der Ansprüche 16-19, **dadurch gekennzeichnet, dass** ein Modul eine mit Öffnungen (111) versehene Abdeckung (104, 124) ist.

21. Warmhaltevorrichtung nach einem der Ansprüche 16-20, **dadurch gekennzeichnet, dass** die Wirk- und Gegenmittel formschlüssige Befestigungsmittel (105-108, 126, 135, 138, 145-148), insbesondere auch Spannschlösser (155, 158) oder Riegel sind.

22. Warmhaltevorrichtung nach Anspruch 21, **dadurch gekennzeichnet, dass** die formschlüssigen Befestigungsmittel (105-108, 126, 135, 138, 145-148) im wesentlichen U-förmige, zylinderförmige oder hohlzylinderförmige Befestigungsmittel sind.

23. Warmhaltevorrichtung nach einem der Ansprüche 16-22, **dadurch gekennzeichnet, dass** Module (101, 104, 121, 124) Befestigungsmittel (105,108, 126, 135, 138, 145, 148) aufweisen, mittels denen die Module (101, 104, 121, 124) gegeneinander gedreht werden können.

24. Warmhaltevorrichtung nach einem der Ansprüche 16-23, **dadurch gekennzeichnet, dass** ein Modul eine Regeleinheit (102), ein zweites Modul eine Halterung (101, 121) und ein drittes Modul eine Abdeckung (104, 124) ist.

## Claims

1. A heat retention system for keeping warm food
with a device (4, 202) and one or more receptacles (5, 55, 103) for accommodating food (8),
which device is designed for accommodating the one or more receptacles (5, 55, 103) and contains a control unit (102, 212), a plate (9, 59, 209) a plurality of active elements (2, 210) as well as a plurality of sensors (16, 18, 56, 215), wherein a sensor for temperature measurement is allocated to each active element, these sensors being allocated to the active elements are attached on or in the plate respectively and
which receptacles each comprise a passive, inductively heatable element (3, 53) and said receptacles (5, 55, 103) individually or together may be brought into interactive connection with the device (4, 202), that receptacles of different dimensions may be combined with the device and that the arrangement of the active elements is such that these may be covered by the one or more receptacles,
in a manner such that each receptacle (5, 55, 103) is heatable by way of the at least one passive, inductively heatable element (3,53) as a result of induction by way of the at least one of the plurality of active elements (2, 210) of the device,
and wherein the temperature of the one or more receptacles (5, 55, 103) may be kept to a settable value by way of the one or more sensors (16, 18, 56, 216) and the control unit (102, 212) independently of the extent of filling.

2. Heat retention system according to claim 1, **characterized in that** the at least one active element (2, 210) is an induction coil.

3. Heat retention system according to claim 2, **characterized in that** at least one of the sensors (16, 18, 56, 215) is located in the middle of one of the induction coils (2, 210).

4. Heat retention system according to one of the preceding claims, **characterized in that** the active elements (2, 210) are individually controllable.

5. Heat retention system according to one of the preceding claims, **characterized by** sensor means for recognizing which of the active elements (2, 210) are actively connected to passive elements (3, 53).

6. Heat retention system according to claim 5, **characterized in that** only those active elements (2, 210) which are actively connected to passive elements (3, 53) are supplied with energy.

7. Heat retention system according to one of claims 1-6, **characterized in that** the plate (9, 59, 209) is a ceramic plate.

8. Heat retention system according to one of claims 1-7 **characterized in that** the receptacles have dimensions which are adapted to norms usual in gastronomy (catering standard).

9. Heat retention system according to one of claims 1-8, **characterized in that** at least one of the receptacles (5, 55, 103) is a ceramic pan.

10. Heat retention system according to claim 9, **characterized in that** the passive element (3, 53) of the ceramic pan (5, 55) is a ferro-magnetic foil.

11. Heat retention system according to one of claims 1-10, **characterized by** switch means (12) for switching between different power stages, wherein a temperature is allocated to each power stage and wherein by way of the control unit (102, 212) the energy supply to the active elements may be reduced when the temperature of the food (8) rises to a temperature above the temperature allocated to the power stage.

12. Heat retention system according to claim 11, **characterized in that** via the control unit (102, 212) temperatures in a range of 60°C to 85°C may be set.

13. Method for keeping warm food with a heat retention system according to one of claims 1-12, **characterized in that** food (8) is kept warm by way of inductive energy transmission from at least one active (2, 210) into at least one passive element (3, 53), that the temperature of the food (8) directly or indirectly is measured and controlled by way of sensor (16, 18, 56, 215) and control unit (102, 212) allocated to at least the one of the active elements, that thus a fast and efficient control of supplied energy into the at least one active element (2, 210) is possible and the temperature of the food (8) is held at a settable temperature.

14. Method according to claim 13, **characterized in that** the energy supply into the at least one active element (2, 210) is interrupted as soon as this at least one active element (2, 210) is not actively connected to a passive element (3, 53).

15. Heat retention device for keeping warm food by means of inductively generated heat as part of a heat retention system according to one of claims 1-12, comprising a control unit (102, 212), a plurality of active elements, a plate, as well as, allocated to each active element, a sensor (16, 56, 215) for temperature measurement, which is attached on or in the plate respectively, wherein the dimension of the plate, as well as the arrangement of the active elements are such that they may be combined in a space saving manner with inductively heatable receptacles, which may have different dimensions, wherein one ore more active elements may be covered by the respective receptacles and wherein by way of sensors and control unit the power into the active elements is controllable.

16. A heat retention device according to claim 15, **characterized by** several modules (101, 102, 104, 121, 124, 142), said modules (101, 102, 104, 121, 124, 142) comprising fastening means (105-108, 126, 135, 138, 145-148, 155, 158) in the form of active and counter means for the releasable connection of the individual modules (101, 102, 104, 121, 124, 142).

17. Heat retention device according to claim 16, **characterized in that** one module is an energy part which serves for the inductive heating of at least one receptacle (103).

18. Heat retention device according to claim 17, **characterized in that** the energy part is designed as a control unit (102) and contains active inducing elements usable for inductive heating, a control and an energy supply.

19. Heat retention device according to one of the claims 16-18, **characterized in that** one module is a mounting in the form of a stand (101), of a tabular construction (121) or of an installation surface.

20. Heat retention device according to one of the claims 16-19, **characterized in that** one module is a covering (104, 124) provided with openings (111).

21. Heat retention device according to one of the claims 16-20, **characterized in that** the active and counter means are positive fit fastening means (105-108, 126, 135, 138, 145-148) in particular are also tumbuckles (155, 158) or bars.

22. Heat retention device according to claim 21, **characterized in that** the positive-fit fastening means (105-108, 126, 135, 138, 145-148) are essentially U-shaped, cylinder-shaped or hollow cylinder shaped fastening means.

23. Heat retention device according to one of the claims 16-22, **characterized in that** modules (101, 104, 121, 124) comprise fastening means (105, 108, 126, 135, 138, 145, 148) by way of which the modules (101, 104, 121, 124) may be mutually rotated.

24. Heat retention device according to one of the claims 16-23, **characterized in that** one module is a control unit (102), a second module a mounting (101, 121) and a third module a covering (104,124).

## Revendications

1. Système de conservation de la chaleur pour le maintien au chaud d'aliments, avec un dispositif (4, 202) et un ou plusieurs récipients (5, 55, 103) destinés à recevoir des aliments (8),
lequel dispositif est équipé pour recevoir un ou plusieurs récipients (5, 55, 103) et comprend une unité de régulation (102, 212), une plaque (9, 59, 209), plusieurs éléments actifs (2, 210), ainsi que plusieurs capteurs (16, 18, 56, 215), chaque élément actif étant associé à un capteur (16, 18, 56, 215) servant à mesurer la température, ces capteurs associés aux éléments actifs étant disposés sur ou dans la plaque, et
lesquels récipients présentent chacun au moins un élément passif pouvant être chauffé par induction (3, 53), les récipients pouvant être mis en relation active avec le dispositif (4, 202) individuellement ou ensemble, des récipients de dimensions différentes pouvant être combinés avec le dispositif et la disposition des éléments actifs étant telle que ceux-ci puissent être couverts par le ou les récipients,
de telle sorte que chaque récipient (5, 55, 103) puisse être chauffé par au moins un des éléments passifs pouvant être chauffés par induction (3, 53) à la suite de l'induction par au moins un des éléments actifs (2, 210) du dispositif,
la température du ou des récipients (5, 55, 103) pouvant être maintenue à une valeur réglable au moyen du ou des capteurs (16, 18, 56, 215) et de l'unité de régulation (102, 212) indépendamment du degré de remplissage.

2. Système de conservation de la chaleur selon la revendication 1, **caractérisé en ce que** l'élément actif (2, 210) au nombre d'un au moins est une bobine à induction.

3. Système de conservation de la chaleur selon la revendication 2, **caractérisé en ce que** l'un au moins des capteurs (16, 18, 56, 215) se trouve au milieu de l'une des bobines à induction (2, 210).

4. Système de conservation de la chaleur selon l'une des revendications précédentes, **caractérisé en ce que** les éléments actifs (2, 210) sont réglables séparément.

5. Système de conservation de la chaleur selon l'une des revendications précédentes, **caractérisé en ce qu'**il comporte des moyens formant capteur pour détecter lesquels des éléments actifs (2, 210) sont en relation active avec des éléments passifs (3, 53).

6. Système de conservation de la chaleur selon la revendication 5, **caractérisé en ce que** seuls les éléments actifs (2, 210) en relation active avec des éléments passifs (3, 53) sont alimentés en énergie.

7. Système de conservation de la chaleur selon l'une des revendications 1 à 6, **caractérisé en ce que** la plaque (9, 59, 209) est un plateau en Ceran.

8. Système de conservation de la chaleur selon l'une des revendications 1 à 7, **caractérisé en ce que** les récipients présentent des dimensions compatibles avec la norme Gastronorm.

9. Système de conservation de la chaleur selon l'une des revendications 1 à 8, **caractérisé en ce que** l'un au moins des récipients (5, 55, 103) est une cuvette en céramique.

10. Système de conservation de la chaleur selon la revendication 9, **caractérisé en ce que** l'élément passif (3, 53) de la cuvette en céramique (5, 55) est une feuille ferromagnétique.

11. Système de conservation de la chaleur selon l'une des revendications 1 à 10, **caractérisé en ce qu'**il comporte des moyens de commutation (12) pour la commutation entre différents niveaux de puissance, chaque niveau de puissance correspondant à une température et l'unité de régulation (102, 212) pouvant réduire l'alimentation en énergie des éléments actifs lorsque la température des aliments (8) dépasse la température correspondant au niveau de puissance.

12. Système de conservation de la chaleur selon la revendication 11, **caractérisé en ce que** l'unité de régulation (102, 212) permet de régler la température dans une plage comprise entre 60°C et 85°C.

13. Procédé pour le maintien au chaud d'aliments utilisant un système de conservation de la chaleur selon l'une des revendications 1 à 12, **caractérisé en ce que** des aliments (8) sont maintenus au chaud par transfert d'énergie par induction entre au moins un élément actif (2, 210) et au moins un élément passif (3, 53), **en ce que** la température des aliments (8) est mesurée et réglée directement ou indirectement au moyen du capteur (16, 18, 56, 215) associé à l'élément actif au nombre d'un au moins et de l'unité de régulation (102, 212), **en ce que** l'on obtient ainsi une régulation rapide et efficace de l'énergie amenée à l'élément actif (2, 210) au nombre d'un au moins et que la température des aliments (8) est maintenue à une valeur réglable.

14. Procédé selon la revendication 13, **caractérisé en ce que** l'alimentation en énergie de l'élément actif (2, 210) au nombre d'un au moins est interrompue dès que cet élément actif (2, 210) au nombre d'un au moins n'est pas en relation active avec un élément passif (3, 53).

15. Dispositif de conservation de la chaleur pour maintenir au chaud des aliments au moyen d'une chaleur pouvant être produite par induction, en tant que partie d'un système de conservation de la chaleur selon l'une des revendications 1 à 12, présentant une unité de régulation (102, 212), plusieurs éléments actifs, une plaque, ainsi qu'un capteur (16, 56, 215) associé à chaque élément actif et servant à mesurer la température et qui est disposé sur ou dans la plaque, les dimensions de la plaque et la disposition des éléments actifs étant telles qu'ils puissent être combinés de manière peu encombrante avec des récipients pouvant être chauffés par induction qui peuvent présenter différentes dimensions, un ou plusieurs éléments actifs pouvant être couverts par les récipients, et la puissance des éléments actifs pouvant être régulée au moyen des capteurs et de l'unité de régulation.

16. Dispositif de conservation de la chaleur selon la revendication 15, **caractérisé en ce qu'**il comporte plusieurs modules (101, 102, 104, 121, 124, 142), lesquels modules (101, 102, 104, 121, 124, 142) présentent des moyens de fixation (105-108, 126, 135, 138, 145-148, 155, 158) prenant la forme de moyens d'action et de moyens associés pour l'assemblage amovible des différents modules (101, 102, 104, 121, 124, 142).

17. Dispositif de conservation de la chaleur selon la revendication 16, **caractérisé en ce qu'**un module est une partie d'alimentation en énergie qui sert au chauffage par induction d'au moins un récipient (103).

18. Dispositif de conservation de la chaleur selon la revendication 17, **caractérisé en ce que** la partie d'alimentation en énergie est conçue comme une unité de régulation (102) et les éléments actifs à induction pouvant être utilisés pour le chauffage par induction contiennent une commande et une alimentation en énergie.

19. Dispositif de conservation de la chaleur selon l'une quelconque des revendications 16 à 18, **caractérisé en ce qu'**un module est une fixation prenant la forme d'un bâti (101), d'une structure en forme de plateau (121) ou d'une surface encastrée.

20. Dispositif de conservation de la chaleur selon l'une des revendications 16 à 19, **caractérisé en ce qu'**un module est un couvercle (104, 124) pourvu d'ouvertures (111).

21. Dispositif de conservation de la chaleur selon l'une des revendications 16 à 20, **caractérisé en ce que** les moyens d'action et les moyens associés sont des moyens de fixation par complémentarité de forme (105-108, 126, 135, 138, 145-148), en particulier des tendeurs (155, 158) ou des loquets.

22. Dispositif de conservation de la chaleur selon la revendication 21, **caractérisé en ce que** les moyens de fixation à complémentarité de forme (105-108, 126, 135, 138, 145-148) sont des moyens de fixation sensiblement en forme de U, de cylindre ou de cylindre creux.

23. Dispositif de conservation de la chaleur selon l'une des revendications 16 à 22, **caractérisé en ce que** des modules (101, 104, 121, 124) présentent des moyens de fixation (105-108, 126, 135, 138, 145-148) au moyen desquels les modules (101, 104, 121, 124) peuvent être tournés les uns par rapport aux autres.

24. Dispositif de conservation de la chaleur selon l'une des revendications 16 à 23, **caractérisé en ce qu'**un module est une unité de régulation (102), un deuxième module une fixation (101, 121) et un troisième module un couvercle (104, 124).
